# EUROPEAN PATENT APPLICATION

(11) **EP 1 858 111 A1**
(43) Date of publication of application: **21.11.2007**
(21) Application number: 07108104.6
(22) Date of filing: 14.05.2007
(51) Int. Cl.: H01Q 1/12, H01Q 1/32, B60R 13/00

(54) **Automotive component and method for mounting of an automotive component**

(30) Priority: 16.05.2006 EP 06113989
(71) Applicant: Ford-Werke GmbH, 50735 Köln (DE)
(72) Inventor: Ermert, Robert, 51467, Bergisch Gladbach (DE); Boller, Martin, 53121, Bonn (DE); Howe, Peter, Teddington, Middlesex TW11 9HX (GB); Vandewinkel, Jan, 3680 Maaseik (BE); Dunn, Phil, Southend-on-sea, Essex SS2 6NS (GB); Ratford, Steve, Aylesford Maidstone, Kent ME 20 6SL (GB)
(74) Representative: Drömer, Hans-Carsten

(57) **Abstract**

Automotive component (1) which is mounted on one side of a panel (10) by fastening means on the other side of the panel (10) comprising a first fastening means (4) which extends through a first hole in the panel (10), a second fastening means (11, 12) which engages the first fastening means (4) from the other side of the panel (10), characterized in that the component (1) further comprises a gripping element (7, 8, 9) for pulling the component (1) into place during fastening and method for mounting of a corresponding automotive component (1).

## Description

The present invention generally relates to automotive components and methods for mounting of such components.

In many situations it is necessary to attach a component to a panel or other support structure. One example is the attaching of an antenna to an automobile roof or trunk lid.

When such components are installed on an assembly line it is important that the component can be accurately and quickly secured to the panel. It is also important that the component be self-contained so as to eliminate the need for multiple parts or two handed or multiple person operation to install the component.

Further it is important that the installation be as simple as possible with few operational steps. In some applications there is additional a requirement that the component be properly orientated relative to the panel.

There are numerous known apparatus and process to attach a component to a panel. In most of these known procedures the use of both hands or multiple people is required for the installation because the component is positioned on one side of the panel and the fasting means is operated from the opposite side of the panel.

In addition most installations of known components require multiple steps or the apparatus involves the use of many often small parts such as nuts, washers, bolts, screws or the like.

Usually rooftop antennas, which are common in the industry, require a hole in the roof. Typically the antennas have fly leads which need to be fed through this hole in the roof. From the inside the antenna is fixed with a nut which has to cut out to allow the fly leads to bend backwards. A problem is that the assembler has great difficulty to reach the hole on the roof. It is impossible to feed through the fly leads and from the inside is not possible to fix the not without somebody from the outside holding down the antenna.

US 6,879,301 B2 describes a waterproof automotive antenna mounting assembly gasket comprising a base having a plurality of apertures and a mounting hole disposed therein, a generally sloped outer casing extending upward from the base, an inner casing connected along the bottom portion of the outer casing and positioned interior to the outer casing, the gap positioned between the bottom portion of the inner casing and the base, a plurality of compressible tabs extending inwardly from the inner casing and aligned with the apertures in the base, the channel disposed in between the inner and outer casings, a plurality gripping members disposed on the base plate, a sealing interface disposed on the base and an anti-rotation hole disposed on the base. The anti-rotation hole aligns with the corresponding hole attached to a secondary surface. By use of the anti-rotation hole and in similar way use of keying features (downward orientated pin) which extended from the unit into a small opening of the panel it is possible to mount the mounting assembly on the panel with a predetermined orientation.

Assembly of this antenna mounting assembly requires it downward push of the antenna unit and the attachment assembly through an opening in the panel. The attachment assembly is inserted through the opening in the panel while resilient fingers of a snap ring compress radially inward. The tips of the fingers extend within arcuate between the tabs of the base plate. Once the snap ring passes fully through the opening the fingers spread radially outward. The tips of the fingers, which are preferably bent inwardly, abut against the interior surface of the panel, thereby locking the attachment assembly in place. Further adjustments can be made by rotating a jam nut.

This mounting assembly requires several parts and it is also necessary to make final adjustments by use of the jam nut. If the antenna is to be mounted in a centered manner on a rooftop, it is impossible for the assembler push the antenna mounting assembly downward through the opening in the rooftop and at the same time adjust the attachment with the jam nut.

Therefore it is an object of the present invention to provide an automotive component and method for mounting of an automotive component, which allow an easy assembly by a single person, especially on the panel which cannot be easily accessed by single person from both sides, for example a rooftop or trunk lid of an automobile. The component should also comprise as few parts as possible to reduce costs.

These objectives are solved by the automotive component of claim 1 and also by the method of claim 10.

According to the invention, and automotive component which is mounted on one side of a panel by fastening means on the other side of the panel comprises a first fastening means which extends through a first hole in the panel, a second fastening means which engages the first fastening means from the other side of the panel, and is characterized in that the component further comprises a gripping element for pulling the component into place during fastening.

This allows the component to be put on one side of the panel, for example the rooftop, and then using the fastening means from the other side of the panel while pulling the component into place via the gripping element. Therefore it is not necessary for a second person to push the component downward on the panel. Also the component does not need the relative complex arrangement known from the US 6,879,301 described above, which also has several parts.

According to one embodiment of the invention the automotive component the gripping element extends through a hole in the panel to the other side of the panel.

According to a further embodiment of the invention the automotive component the gripping element is formed to allow for non-positive gripping by an assembler and/or with a tool. Further the gripping element preferably has an enlarged head. These features allow for easy gripping and pulling.

In a preferred embodiment of the invention the gripping element has an undercut, which can be formed by a mushroom type shape of the head of the gripping element.

And then especially preferred embodiment of the invention the gripping element is formed by part of a keying means including a locator pin which extends through a second hole in the panel, which is displaced from the first hole, so that rotation of the component is prevented, or even by the locator pin itself. Therefore no additional parts are necessary.

The automotive component of the invention is preferably an antenna, especially a roof top or trunk lid antenna, e.g. an AM/FM, GPS or GSM antenna . However it is to be understood that the component is not limited to an antenna, as the invention can be applied to almost every component that is intended to be fixed to the outside of a vehicle by fastening means on the inside.

The invention also relates to a method for mounting of an automotive component to one side of a panel by fastening means on the other side of the panel comprising the following steps:
extending a first fastening means through a first hole in the panel,
engaging the first fastening means from the other side of the panel with a second fastening means,
extending keying means including a locator pin through a second hole in the panel, which is displaced from the first hole, so that rotation of the component is prevented,
and is characterized in that the method further comprises pulling a gripping element for pulling the component into place during fastening.

Preferably in the gripping element is pulled by use of a tool.

According to a preferred embodiment of the method the gripping element is pulled in a non-positive manner, which may be allowed, when the gripping element is formed with an enlarged head, an undercut or a head with a mushroom type shape for non-positive engagement.

In an especially preferred embodiment the gripping element is formed by the locator pin.

The foregoing will be better understood from the following detailed description of the invention with reference to the drawing, in which:
Fig. 1 is a section through an automobile roof panel and the antenna, and
Fig. 2 is a perspective view of the interior side of an automobile roof panel with the antenna of Fig. 1 during fastening.

Referring now to the drawings, the illustrated embodiment shows an antenna 1, which consists of a hollow antenna casing 2 with a streamlined form, which is to be mounted on the rooftop of an automobile and covers the antenna parts.

In the illustrated embodiment the antenna 1 is a GPS/GSM antenna. It will be appreciated that the method of attachment of the present embodiment may be used with any type of antenna and associated cover or base unit or with any other device or object that is intended to be affixed to a panel.

The antenna casing 2 has a flat base plate 3, which is to be placed on the roof panel 10. From the flat base plate 3 threaded fastening means in form of a threaded bolt 4 extend outwards, so as to extend through a corresponding hole in the roof panel 10.

On the base plate 3 there also exists electrical connection means 5, 6 for connecting the antenna with the corresponding electrical parts within the vehicle.

For this reason there is a corresponding second hole in the roof panel 10. The separate electrical connection means 5, 6 allow for a convenient electrical connection as the fly leads must not be passed through the threaded bolt 4, as is usually the case.

Also extending outwards from the flat base plate 3 there are a keying means and form of the locator pin 7, which is somewhat displaced from the threaded bolt 4, which also extends through a corresponding hole in the roof panel 10 in and therefore prevents rotation of the antenna 1 and also allows for its correct positioning.

The locator pin 7 has a head 8 with the form of a mushroom and is connected to the locator pin 7 via an undercut 9, which extends radially outward from the axis of the locator pin 7, i.e. has a cylindrical form.

The antenna 1 is placed on the roof panel 10 with its appropriate orientation, which is predefined by the holes in the roof panel 10 and the location of the threaded bolt 4 and the locator pin 7.

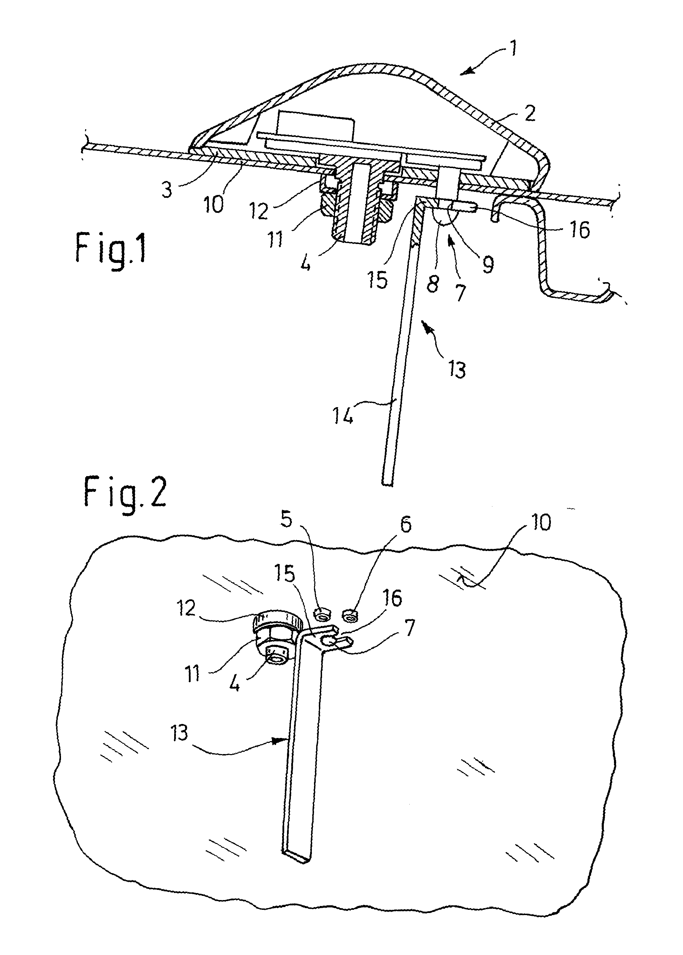

Both the threaded bolt 4 and the locator pin 7 extend through their corresponding holes in the roof panel 10, as can be seen in figure 2, in which the inside 10 of the roof panel 10 is shown.

The threaded bolt 4 is engaged with the second fastening means in form of a threaded nut 11, with a washer 12 fitted in between the inside of the roof panel 10 and the nut 11.

The locator pin 7 extending through the second hole in the roof panel 10, which is displaced from the first hole, so that rotation of the component is prevented, is engaged by a tool 13 in a non-positive manner by engaging the head 8 of the locator pin.

For engagement the tool 13 has a tool head 15, which is bent by ca. 90° to a handle 14 and has a recess 16 corresponding to the undercut 9, so that the head 8 of the locator pin may be gripped with tool 13.

Therefore it is possible for the assembler to pull the antenna 1 into place during mounting, i.e. screwing tight the nut 11, without a second person pushing down the antenna 1 on the roof panel 10.

### Reference list

- 1: antenna
- 2: antenna casing
- 3: base plate antenna casing
- 4: threaded fastening means, threaded bolt
- 5, 6: electrical connection means
- 7: locator pin
- 8: head of locator pin
- 9: undercut
- 10: roof panel
- 11: fastening means, nut
- 12: washer
- 13: tool
- 14: handle
- 15: tool head
- 16: recess

## Claims

1. Automotive component (1) which is mounted on one side of a panel (10) by fastening means on the other side of the panel (10) comprising a first fastening means (4) which extends through a first hole in the panel (10), a second fastening means (11, 12) which engages the first fastening means (4) from the other side (10) of the panel (10), **characterized in that** the component (1) further comprises a gripping element (7, 8, 9) for pulling the component (1) into place during fastening.

2. Automotive component of claim 1, in which the gripping element (7) extends through a hole in the panel (10) to the other side of the panel (10).

3. Automotive component of claim 1 or 2, in which the gripping element (7) is formed to allow for non-positive gripping by an assembler and/or with a tool.

4. Automotive component of one of claims 1 to 3, in which the gripping element (7) has an enlarged head (8).

5. Automotive component of claim 4, in which the gripping element (7) has an undercut (9).

6. Automotive component of claim 4 or 5, in which the gripping element head (8) has a mushroom type shape.

7. Automotive component of one of claims 1 to 6, in which the gripping element (7, 8, 9) is formed by part of a keying means including a locator pin (7) which extends through a second hole in the panel (10), which is displaced from the first hole, so that rotation of the component is prevented.

8. Automotive component of claim 7, in which the component is gripping element is the locator pin (7).

9. Automotive component of one of claims 1 to 8, in which the component is an antenna (1), especially a roof top or trunk lid antenna.

10. Method for mounting of an automotive component (1) to one side of a panel (10) by fastening means on the other side of the panel (10) comprising
extending a first fastening means (4) through a first hole in the panel (10), engaging the first fastening means (4) from the other side (10) of the panel (10) with a second fastening means (11, 12),
extending keying means (7) including a locator pin (7) through a second hole in the panel (10), which is displaced from the first hole, so that rotation of the component (1) is prevented,
**characterized in that** the method further comprises pulling a gripping element (7, 8, 9) for pulling the component (1) into place during fastening.

11. Method of claim 10, in which the gripping element (7) is pulled by use of a tool (13).

12. Method of claim 10 or 11, in which the gripping element (7) is pulled in a non-positive manner.

13. Method of claim 12, in which the gripping element (7) is formed with an enlarged head (8), an undercut (9) or a head (8) with a mushroom type shape for non-positive engagement.

14. Method of one of claims 10 to 13, in which the gripping element is formed by the locator pin (7).
